(19) Europäisches Patentamt
European Patent Office
Office européen des brevets

(11) **EP 4 055 459 B1**

(12) **EUROPÄISCHE PATENTSCHRIFT**

(45) Veröffentlichungstag und Bekanntmachung des Hinweises auf die Patenterteilung:
**08.05.2024   Patentblatt 2024/19**

(21) Anmeldenummer: **20780666.2**

(22) Anmeldetag: **24.09.2020**

(51) Internationale Patentklassifikation (IPC):
**G05D 1/00** *(2024.01)*      **G01C 21/20** *(2006.01)*
**G05D 1/242** *(2024.01)*     **G05D 1/246** *(2024.01)*
**G05D 109/10** *(2024.01)*    **G05D 111/10** *(2024.01)*

(52) Gemeinsame Patentklassifikation (CPC):
**G01C 21/206; G05D 1/242; G05D 1/2464;**
G05D 2109/10; G05D 2111/17

(86) Internationale Anmeldenummer:
**PCT/EP2020/076742**

(87) Internationale Veröffentlichungsnummer:
**WO 2021/089231 (14.05.2021 Gazette 2021/19)**

(54) **COMPUTER-IMPLEMENTIERTES VERFAHREN ZUM ERSTELLEN EINER UMGEBUNGSKARTE FÜR DAS BETREIBEN EINES MOBILEN AGENTEN**

COMPUTER-IMPLEMENTED METHOD FOR CREATING A MAP OF THE SURROUNDING AREA FOR THE OPERATION OF A MOBILE AGENT

PROCÉDÉ MIS EN OEUVRE PAR ORDINATEUR POUR CRÉER UNE CARTE D'UN ENVIRONNEMENT AFIN DE PERMETTRE LE FONCTIONNEMENT D'UN AGENT MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2019   DE 102019217160**

(43) Veröffentlichungstag der Anmeldung:
**14.09.2022   Patentblatt 2022/37**

(73) Patentinhaber: **Robert Bosch GmbH**
**70442 Stuttgart (DE)**

(72) Erfinder: **BIBER, Peter**
**72072 Tuebingen (DE)**

(56) Entgegenhaltungen:
• **RUIBIN GUO ET AL: "RGB-D SLAM Using Point-Plane Constraints for Indoor Environments",** SENSORS, Bd. 19, Nr. 12, 17. Juni 2019 (2019-06-17) , Seite 2721, XP055747404, DOI: 10.3390/s19122721
• **ALEX FLINT ET AL: "Growing semantically meaningful models for visual SLAM", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13. Juni 2010 (2010-06-13), Seiten 467-474, XP031726001, ISBN: 978-1-4244-6984-0**
• **LE PHI-HUNG ET AL: "Dense piecewise planar RGB-D SLAM for indoor environments", 2017 IEEE/RSJ INTERNATIONAL CONFERENCE ON INTELLIGENT ROBOTS AND SYSTEMS (IROS), IEEE, 24. September 2017 (2017-09-24), Seiten 4944-4949, XP033266526, DOI: 10.1109/IROS.2017.8206375 [gefunden am 2017-12-13]**
• **Brian Peasley: "Large Scale 3D Mapping of Indoor Environments Using a Handheld RGBD Camera", , 1. Januar 2014 (2014-01-01), Seiten 1-146, XP055200911, Gefunden im Internet: URL:http://tigerprints.clemson.edu/all_dis sertations/1229 [gefunden am 2015-07-08]**

**Beschreibung**

Technisches Gebiet

Die Erfindung betrifft das Gebiet der autonomen Steuerung eines mobilen Agenten innerhalb eines Bewegungsbereiches. Insbesondere betrifft die vorliegende Erfindung Verfahren zum Lokalisieren eines mobilen Agenten in einer Umgebung.

Technischer Hintergrund

Mobile Agenten sind für viele Anwendungen bekannt. Dabei soll der mobile Agent sich in einer mit Begrenzungen (Wände) und Hindernissen (Objekte) versehenen Umgebung selbstständig bewegen. Derartige mobile Agenten können beispielsweise einen Roboter, ein Fahrzeug, einen autonomen Reinigungsroboter, einen autonomen Rasenmäher und dergleichen umfassen.

Die Fähigkeit, eine genaue Pose (Position und Orientierung) eines mobilen Agenten in einer durch Sensordaten definierten Umgebung zu bestimmen, und eine der genauen Pose zugeordneten Umgebungskarte zu bestimmen, ist die Grundlage für eine Trajektorienplanung eines Bewegungspfades innerhalb der Umgebung.

Eine herkömmliche Vorgehensweise zum Erstellen einer Umgebungskarte sieht das Verwenden von einer Umgebungserfassungssensorik des mobilen Agenten vor, die beispielsweise ein Lidarsystem, eine Kamera, Inertialsensorik, Odometriesensorik und dergleichen umfassen kann. Um eine Umgebungskarte zu erstellen, wird der mobile Agent in der Regel gesteuert oder automatisch bewegt und die Sensordaten der Umgebungserfassungssensorik ausgewertet, um eine Umgebungskarte zu erstellen.

Die Druckschrift Ruibin Guo et al., "RGB-D SLAM Using Point-Plane Constraints for Indoor Environments", Sensors, Bd. 1, Nr. 12, 17. Juni 2019, Seite 2721 offenbart ein Verfahren zur Posenschätzung und Kartenrekonstruktion der aktuellen Umgebung mit RGB-D-Kameras. Dazu werden die Punkt- und Ebenenmerkmale aus Farb- und Tiefenbildern ermittelt und Kostenfunktionen aus diesen Merkmalen bestimmt. Weiterhin werden Achsen einer Manhattan-Welt (MW) auf der Grundlage der Normalen der Ebene und Fluchtrichtungen paralleler Linien für die MW-Szenen extrahiert. Die MW Achsen werden zu den Punkt-Ebene-basierten Kostenfunktionen für eine genauere Posenschätzung hinzugefügt.

Die Druckschrift ALEX FLINT ET AL: "Growing semantically meaningful models for visual SLAM", 2010 IEEE CONFERENCE ON COMPUTER VISION AND PATTERN RECOGNITION (CVPR), 13. Juni 2010 (2010-06-13), Seiten 467-474 offenbart ein verfahren zur Verbesserung eines SLAM-Systems, indem eine Manhattan-Welt-Annahme genutzt wird, um Fluchtrichtungen aus einem Videostrom extrahiert werden. Die Fluchtrichtungen werden ausgewertet, an Achsen ausgerichtete Kanten zu bestimmen.

Die Druckschrift LE PHI-HUNG ET AL: "Dense piecewise planar RGB-D SLAM for indoor environments", 2017 IEEE/RSJ INTERNATIONAL CONFERENCE ON INTELLIGENT ROBOTS AND SYSTEMS (IROS), IEEE, 24. September 2017, Seiten 4944-4949 offenbart ein Verfahren zum Analysieren einer Struktur von Innenräumen aus RGB-D-Videosequenzen in einer Online-Umgebung.

Ein herkömmliches Verfahren zum Erstellen der Umgebungskarte sieht das Anwenden eines sogenannten SLAM-Algorithmus vor, der die aufgezeichneten Daten der Umgebungserfassungssensorik verarbeitet und daraus die Pose des mobilen Agenten bestimmt und eine entsprechende Umgebungskarte ermittelt.

Offenbarung der Erfindung

Erfindungsgemäß sind ein Verfahren zum Lokalisieren eines mobilen Agenten innerhalb einer Umgebung gemäß Anspruch 1 sowie eine Vorrichtung zum Lokalisieren eines mobilen Agenten, eine Vorrichtung zum Steuern eines mobilen Agenten in einer Umgebung sowie einen mobilen Agenten gemäß dem nebengeordneten Anspruch vorgesehen.

Weitere Ausgestaltungen sind in den abhängigen Ansprüchen angegeben.

Gemäß einem ersten Aspekt ist ein Verfahren zum Betreiben eines mobilen Agenten in einer Umgebung basierend auf einer Pose des mobilen Agenten vorgesehen, wobei eine Lokalisation des mobilen Agenten mit folgenden Schritten durchgeführt wird:

- Erfassen von Sensordaten über in einer Umgebung befindlichen Wände und/oder Objekte, wobei die Sensordaten die Ausrichtung und Entfernung der Wände und/oder Objekte in einem agentenfesten Agenten-Koordinatensystem angeben;
- Ermitteln der Pose des mobilen Agenten in der Umgebung mithilfe eines SLAM-Algorithmus unter Berücksichtigung einer Manhattan-Orientierung.

Weiterhin sieht der SLAM-Algorithmus die Minimierung einer von Messfehler der Sensordaten abhängigen Fehlerfunktion vor, die von der Manhattan-Orientierung abhängt. Der SLAM-Algorithmus entspricht einem graphbasierten SLAM-Algorithmus basierend auf einem SLAM-Graphen mit Knoten und Kanten, wobei der SLAM-Graph Posenknoten, die jeweils eine aus den Sensordaten ermittelte Pose des mobilen Agenten angeben, und Transformationskanten zwischen jeweils zwei Posenknoten aufweist, wobei die Transformationskanten eine aus den Sensordaten ermittelte Posenänderung zwischen den den jeweils zwei Posenknoten zugeordneten Posen angeben, wobei abhängig von der Manhattan-Orientierung ein Manhattan-Knoten und mindestens eine Manhattan-Kante zwischen dem Manhattan-Knoten und einem der Posenknoten hinzugefügt wird.

Weiterhin berücksichtigt die Fehlerfunktion die den Knoten und Kanten zugeordneten Fehlerwahrscheinlichkeiten, die den Knoten des SLAM-Graphen zugeordnete korrigierte Posen ermittelt.

Ein grundsätzlicher Nachteil des SLAM-Algorithmus für das Lokalisieren eines mobilen Agenten, d.h. für die Bestimmung einer absoluten Pose des mobilen Agenten innerhalb der Umgebung, besteht darin, dass dieser Drift der erfassten Sensordaten akkumuliert. Insbesondere der Erfassungsfehler bezüglich der ermittelten Orientierung verursacht durch die Kopplungen eine erhebliche Drift der gekoppelten Position des mobilen Agenten. Die Orientierungsdrift kann zwar durch direkte Messungen der Ausrichtung kompensiert werden, jedoch sind solche direkte Messungen der Ausrichtung in der Regel nur durch Kompassmessungen möglich, die in vielen Situationen nicht verfügbar sind, insbesondere bei Anwendungen in Gebäuden oder in durch Fremdmagnetfelder stark belasteten Umgebungen.

Das obige Verfahren sieht die Kombination des SLAM-Algorithmus mit Annahmen einer Manhattan-Welt vor. Das Manhattan-Welt-Konzept besteht darin, dass viele künstliche Umgebungen regelmäßige Strukturen aufweisen, insbesondere dass viele Wände parallel oder rechtwinklig zueinander stehen und dass Wände üblicherweise über längere Strecken geradlinig verlaufen und eben sind. Beispielsweise ist das Manhattan-World-Konzept in der Druckschrift B. Beasley et al., "Accurate On-Line 3D Occupancy Grids Using Manhattan World Constraints", 2012, IEEE/RSJ International Conference on Intelligent Robots and Systems, Vilamoura, S. 5283 bis 5290, bekannt.

Grundsätzlich sieht das Verfahren eine Verbesserung des herkömmlichen SLAM-Algorithmus für 2D-Umgebungen vor. Ein herkömmlicher SLAM-Algorithmus kann als ein graph-basierter SLAM-Algorithmus ausgestaltet sein und die Erstellung eines Graphen vorsehen, der Posenknoten und Transformationskanten zwischen jeweils zwei Posenknoten aufweist. Die Posenknoten repräsentieren eine durch die Umgebungserfassungssensorik erfassten Pose des mobilen Agenten, und die Transformationskanten eine gemessene Posenänderung zwischen zwei verschiedenen Posen des mobilen Agenten. Die Pose wird bezüglich eines Referenz-Koordinatensystems, das ortsfest bezüglich der Umgebung ist, angegeben.

Aufgrund von Rauschen oder anderen Messfehlern ist es nicht möglich, den Graphen exakt aufzulösen, so dass die durch die Posenknoten angegebenen Posen des mobilen Agenten zu den durch die Transformationskanten angegebenen, gemessenen Bewegungen des mobilen Agenten konsistent sind. Stattdessen werden die ermittelten Posen und Bewegungen mit einer Fehlerwahrscheinlichkeit angegeben und zur Bestimmung der exakten Posen des mobilen Agenten eine Fehlerfunktion minimiert, die über alle Transformationskanten summiert ist. Die Minimierung erfolgt insbesondere mithilfe herkömmlicher Optimierungsverfahren, wie z. B. Gauß-Newton oder Levenberg-Marquardt.

Weitere Knoten und Kanten können dem Graphen basierend auf dem Manhattan-World-Konzept hinzugefügt werden. Für jede Ermittlung einer gültigen Manhattan-Orientierung in einem Erfassungsschritt kann ein Manhattan-Knoten und eine Manhattan-Kante zwischen einem der Posenknoten und dem betreffenden Manhattan-Knoten in den SLAM-Graphen eingefügt werden. Der nachfolgende Optimierungsalgorithmus zum Minimieren des Fehlers verwendet dann die zusätzlichen Randbedingungen, die durch die Manhattan-Orientierung vorgegeben sind, um sowohl die Posen von jedem Posenknoten zu ermitteln. Das Referenz-Koordinatensystem kann dann auf die Manhattan-Orientierung ausgerichtet werden.

Das obige Verfahren ermöglicht es, eine Manhattan-Orientierung in jedem Erfassungszyklus zu detektieren, um eine Manhattan-Orientierung als Winkel im Bereich von -45° bis +45° zu ermitteln.

Insbesondere benötigt das obige Verfahren keinen Bezug zu einem vorangegangenen Erfassungszyklus und kann auch in Umgebungen angewendet werden, die nur teilweise einer Manhattan-Welt entsprechen. Durch die explizite Darstellung der Manhattan-Orientierung ist es möglich, das Referenz-Koordinatensystem auf die Manhattan-Orientierung auszurichten, um so eine zu dem Referenz-Koordinatensystem ausgerichtete Umgebungskarte bereitzustellen. Durch die ständige Neubewertung der Sensordaten entfällt das Verfahren zum Auffinden von Entsprechungen zu vorangehenden Erfassungszyklen.

Weiterhin kann aus den Sensordaten eine Punktemenge bestimmt werden, die die Koordinaten der erfassten Wände und/oder Objekte angibt, wobei die Punkte der Punktemenge zu einander benachbarte lokale Zellen zusammengefasst werden, wobei eine Manhattan-Normalisierung auf diejenigen Zellen angewendet wird, die eine Zellenorientierung mit einer geradlinigen oder 90°- Struktur aufweisen, wobei die Manhattan-Orientierung abhängig von einer dominanten Orientierung von geradlinigen Strukturen in den lokalen Zellen bestimmt wird.

Insbesondere kann zur Bestimmung der dominanten Orientierung der Zellen für jede Zellenorientierung einer Zelle eine Ähnlichkeit zu allen anderen Zellenorientierungen ermittelt werden und für jede Zelle ein Ähnlichkeitsmaß (z.B. als L2-Abstand), insbesondere als eine Summe aus den Ähnlichkeiten der jeweiligen Zelle bezüglich der übrigen Zellen ermittelt werden, wobei die Manhattan-Orientierung einer Zellenorientierung einer der Zellen entspricht, die entsprechend dem Ähnlichkeitsmaß gewählt ist, insbesondere deren Ähnlichkeitsmaß maximal ist.

Weiterhin kann die Bestimmung der Ähnlichkeiten abhängig von einem Manhattan-normalisierten Orientierungsunterschied zwischen jeweils zwei der Zellenorientierungen durchgeführt werden, wobei insbesondere die Ähnlichkeiten abhängig von einer Exponentialfunktion des negativen Manhattan-normalisierten Unterschieds ermittelt werden.

Es kann vorgesehen sein, dass die bestimmte Manhattan-Orientierung nur dann berücksichtigt wird, wenn sich mehr als eine vorgegebene Anzahl von Zellenorientierungen der Zellen innerhalb eines Manhattan-normalisierten Orientierungsunterschieds zu der bestimmten Manhattan-Orientierung befinden.

Gemäß einer Ausführungsform kann mithilfe der aktuellen Pose des mobilen Agenten eine Umgebungskarte ermittelt werden, wobei der mobile Agent abhängig von der Umgebungskarte betrieben wird. Beispielsweise kann die Umgebungskarte und die Pose des mobilen Agenten zur Trajektorienplanung gemäß einem Trajektorienplanungsproblem verwendet werden.

Gemäß einem weiteren Aspekt ist eine Vorrichtung, insbesondere eine Steuereinheit, zum Betreiben eines mobilen Agenten in einer Umgebung basierend auf einer Pose des mobilen Agenten vorgesehen, wobei die Vorrichtung ausgebildet ist, eine Lokalisation des mobilen Agenten mit folgenden Schritten durchzuführen:

- Erfassen von Sensordaten über in einer Umgebung befindlichen Wände und/oder Objekte, wobei die Sensordaten die Ausrichtung und Entfernung der Wände und/oder Objekte in einem agentenfesten Agenten-Koordinatensystem angeben;
- Ermitteln der Pose des mobilen Agenten in der Umgebung mithilfe eines SLAM-Algorithmus unter Berücksichtigung einer Manhattan-Orientierung.

Gemäß einem weiteren Aspekt ist ein mobiler Agent mit der obigen Vorrichtung, einer Umgebungserfassungssensorik zum Bereitstellen der Sensordaten und einer Bewegungsaktuatorik vorgesehen, die ausgebildet ist, um den mobilen Agenten zu bewegen.

Kurzbeschreibung der Zeichnungen

Ausführungsformen werden nachfolgend anhand der beigefügten Zeichnungen näher erläutert. Es zeigen:

Figur 1   eine schematische Darstellung eines mobilen Agenten innerhalb einer zu erfassenden Umgebung;

Figur 2   ein Flussdiagramm zur Veranschaulichung eines Verfahrens zum Ermitteln einer Pose des mobilen Agenten innerhalb einer Umgebung;

Figur 3   eine schematische Darstellung eines Graphen, der im Rahmen eines SLAM-Algorithmus erstellt wird, um die Pose des mobilen Agenten zu ermitteln;

Figur 4   ein Flussdiagramm zur Veranschaulichung der Ermittlung einer Manhattan-Orientierung;

Figur 5a   eine schematische Darstellung einer Erfassung einer Umgebungskarte durch einen herkömmlichen SLAM-Algorithmus, und

Figur 5b   eine Darstellung einer erfassten Umgebungskarte basierend auf einem SLAM-Algorithmus unter Berücksichtigung eines Manhattan-Welt-Konzepts.

Beschreibung von Ausführungsformen

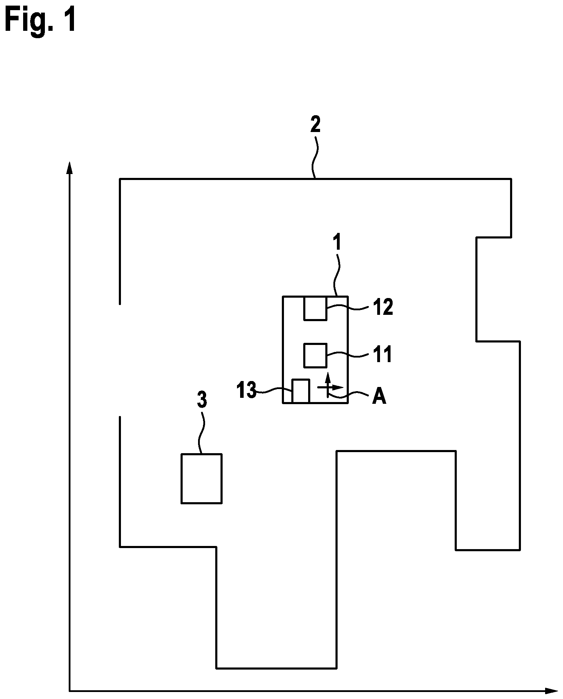

Figur 1 zeigt eine schematische Darstellung eines mobilen Agenten 1 in einer mit Wänden 2 und Objekten 3 definierten Umgebung. Die Umgebung entspricht einer typischen Umgebung, wie sie für Innenräume, Fabrikhallen oder städtische Gebiete üblich ist und weist parallel zueinander und/oder rechtwinklig zueinander verlaufende Wände und/oder Objektkanten auf.

Der mobile Agent 1 weist eine Steuereinheit 11 auf, um den mobilen Agenten 1 zu steuern. Weiterhin weist der mobile Agent 1 eine Umgebungserfassungssensorik 12 auf, um bezüglich eines Agentenkoordinatensystems A die Richtung und den Abstand von umgebenden Wänden und Objekten 2, 3 zu erfassen. Weiterhin weist der mobile Agent 1 eine Bewegungsaktuatorik 13 auf, um den mobilen Agenten 1 entsprechend einer auszuführenden Funktion innerhalb der Umgebung zu bewegen.

Die Umgebungssensorik 12 kann mindestens eine der folgenden Sensoreinrichtungen aufweisen: eine Lidareinrichtung, eine Radareinrichtung, eine Laserscaneinrichtung, eine Kamera, eine Inertialsensorik, eine Odometriesensorik und dergleichen. Die Sensordaten werden entsprechend einer Vorverarbeitung je nach verwendeten Sensoreinrichtungen in der Steuereinheit 11 so verarbeitet, dass bezüglich des Agentenkoordinatensystems A die Ausrichtung und die Entfernung einer Wand oder eines Objekts 2, 3 ermittelt und bereitgestellt werden kann. Zur Ermittlung der Umgebungskarte ist die Pose des mobilen Agenten 1 bezogen auf ein ortsfestes Referenz-Koordinatensystem K zu ermitteln. Die Pose des mobilen Agenten 1 ergibt sich dann aus dem Positionsversatz zwischen dem Agentenkoordinatensystem A des mobilen Agenten 1 und dem Referenz-Koordinatensystem K und aus der Rotationsdifferenz zwischen dem Agenten-Koordinatensystem und dem Referenz-Koordinatensystem.

Aus der Pose des mobilen Agenten 1 im Referenz-Koordinatensystem kann dann basierend auf den Sensordaten die korrigierte Position der Wände 2 und der Objekte 3 im Agentenkoordinatensystem bestimmt werden.

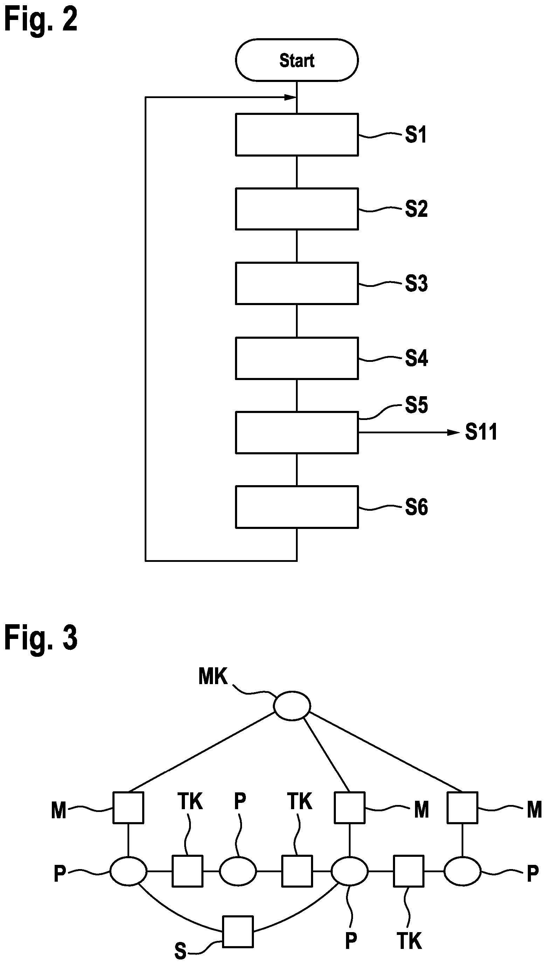

Zur Ermittlung einer Umgebungskarte, die die Position der Wände 2 und der Objekte 3 im Referenz-Koordinatensystem angibt, und der aktuellen Pose des mobilen Agenten 1 wird in der Steuereinheit 11 ein Verfahren ausgeführt, wie es in Verbindung mit dem Flussdiagramm der Fig. 2 näher erläutert wird. Das Verfahren kann als Software- und/oder Hardware-Algorithmus in dem Steuergerät implementiert sein. Im Folgenden wird das Verfahren beispielhaft für eine 2D - Umgebung beschrieben.

In Schritt S1 wird mithilfe der Umgebungserfassungssensorik 12 Sensordaten in einem Erfassungsschritt erfasst, die aus Sicht des mobilen Agenten 1 die Lage (Entfernung und Orientierung bezüglich des Agentenkoordinatensystems) einer oder mehrerer Wände und Objekte 2,3 angeben. Die Sensordaten geben punktweise die gemessenen Koordinaten einer Entfernung von Wänden 2 und Hindernissen/Objekten 3 in einer jeweiligen Ausrichtung an, so dass aus dem Winkel der Ausrichtung (bezogen auf das Agenten-Koordinatensystem) und der Entfernung die relative Position der betreffenden Wand oder des betreffenden Objekts 3 bezüglich des mobilen Agenten 1 bestimmt werden kann. Die Sensordaten können beispielsweise mithilfe von Lidar-Erfassungen und Odometrie-Erfassungen bestimmt werden.

Im Schritt S2 wird ein Referenz-Koordinatensystem gewählt bzw. aktualisiert. Referenz-Koordinatensysteme werden entsprechend parametrisierbaren Kriterien gewählt. Dazu wird das Referenz-Koordinatensystem aktualisiert, wenn eine Bewegung des mobilen Agenten stattgefunden hat. Durch die Wahl des Referenz-Koordinatensystems können die Sensordaten einer festen Position zugeordnet werden. Vorzugsweise wird das Referenz-Koordinatensystem nur dann aktualisiert, wenn eine Bewegung des mobilen Agenten stattgefunden hat.

Initial kann das Referenz-Koordinatensystem durch die Startpose des mobilen Agenten 1 definiert werden. Das Referenz-Koordinatensystem wird neu gewählt, wenn die Posenänderung des mobilen Agenten 1 in Bezug auf das aktuelle, zuletzt geltende Referenz-Koordinatensystem einen Schwellwert (z.B. 2m oder 60 Grad) überschreitet. Das aktualisierte Referenz-Koordinatensystem liegt dann in der aktuellen Pose des mobilen Agenten 1.

Nachfolgend wird ein SLAM-Graph erstellt bzw. erweitert, wie er beispielhaft in Figur 3 dargestellt ist. Der SLAM-Graph wird erstellt, um durch Optimierung die optimale Pose für jeden Posenknoten zu ermitteln.

Hierzu wird in Schritt S3, nachdem ein Referenz-Koordinatensystem gewählt worden ist, ein Posenknoten P (Ovale) dem SLAM-Graphen hinzugefügt. Der Posenknoten P repräsentiert die gemessene Pose des mobilen Agenten 1 bezogen auf das gewählte Referenz-Koordinatensystem. Die gemessene Pose wird durch die im Agentenkoordinatensystem ermittelte Pose des mobilen Agenten 1 und die Transformation (Position des Ursprungs des AgentenKoordinatensystems und dessen Orientierung) zwischen dem Agentenkoordinatensystem und dem Referenz-Koordinatensystem bestimmt. Die Transformation kann beispielsweise bestimmt sein durch eine Rotationsmatrix

$$R(\varphi) = \begin{pmatrix} \cos(\varphi) & -\sin(\varphi) \\ \sin(\varphi) & \cos(\varphi) \end{pmatrix}$$

und einen Positionsversatz $T(x, y = \begin{pmatrix} x \\ y \end{pmatrix}$. Eine Pose des mobilen Agenten 1 ist durch einen Vektor definiert: $p \in \mathbb{R}^3$ (d.h. 3 Werte) mit $p = (x, y, \varphi)'$.

Neben den Posenknoten P weist ein SLAM-Graph Transformationskanten TK auf. Die Transformationskanten TK (Quadrate) werden in Schritt S4 hinzugefügt und verbinden jeweils zwei Posenknoten i und j, die Posen $p_i = (x_i, y_i, \varphi_i)'$ und $p_j = (x_j, y_j, \varphi_j)'$ definieren, und können durch einen Vektor $p_{ji} = (x_{ji}, y_{ji}, \varphi_{ji})' \in \mathbb{R}^3$ angegeben werden, wobei bezüglich der Rotation R und der Translation T folgendes gilt:

$$R_j = R_{ji} * R_i, \ wobei \ R_j = R(\varphi_j), \ R_{ji} = R(\varphi_{ji}), \ R_i = R(\varphi_i)$$

$$T_j = T_i + R_i * T_{ji}, \ wobei \ T_j = T(x_j, y_j), \ T_i = T(x_i, y_i), \ T_{ji} = T(x_{ji}, y_{ji})$$

bzw. $p_i \oplus p_{ji} = p_j$ und $p_{ji} = p_j \ominus p_i$

Transformationskanten TK werden dem SLAM-Graphen hinzugefügt, die sich aus Odometriemessungen und Feststellen einer bereits angefahrenen Pose ergeben können. Diese stellen die gemessene relative Transformation zwischen zwei Posenknoten P, insbesondere zwischen dem aktuellen Posenknoten P und einem oder mehreren zuvor erreichten Posenknoten in dem SLAM-Graphen dar.

Es können zudem bei Erkennen einer zuvor angefahrenen Position des mobilen Agenten 1 Schleifenkanten S (Loop-Closure-Kanten) zwischen zwei entsprechenden Posenknoten P, denen dieselbe Position und/oder Orientierung zugeordnet werden kann, eingefügt werden. Die Schleifenkanten S können entsprechend eine Transformation angeben, die einer Positionsänderung von 0 und einer Rotationsänderung von 0° entspricht.

Solche Schleifen können in einem mehrstufigen Verfahren erkannt werden. In einem ersten Schritt werden Knoten identifiziert, die aufgrund ihrer aktuellen geschätzten Pose potenzielle Kandidaten-Knoten für eine Schleifenkante sind, z.B. wenn ihr Abstand einen Schwellwert, z.B. 1m unterschreitet. In einem zweiten Schritt wird durch eine Scan Matching Methode eine optimale Transformation zwischen den potenziellen Kandidaten-Knoten ermittelt. In einem dritten Schritt werden alle bisher ermittelten potenziellen Kandidaten-Knoten auf gegenseitige Konsistenz geprüft, z.B. durch ein Spectra Clustering Verfahren. Nur bei erfolgreicher Prüfung wird potenzieller Kandidaten-Knoten als Schleifenkante in den Graph eingefügt. Eine beispielhafte Implementierung dieses Verfahrens wird ausführlich z.B. in Edwin B. Olson. 2008. Robust and Efficient Robotic Mapping. Ph.D. Dissertation. Massachusetts Institute of Technology, Cambridge, MA, USA. Beschrieben.

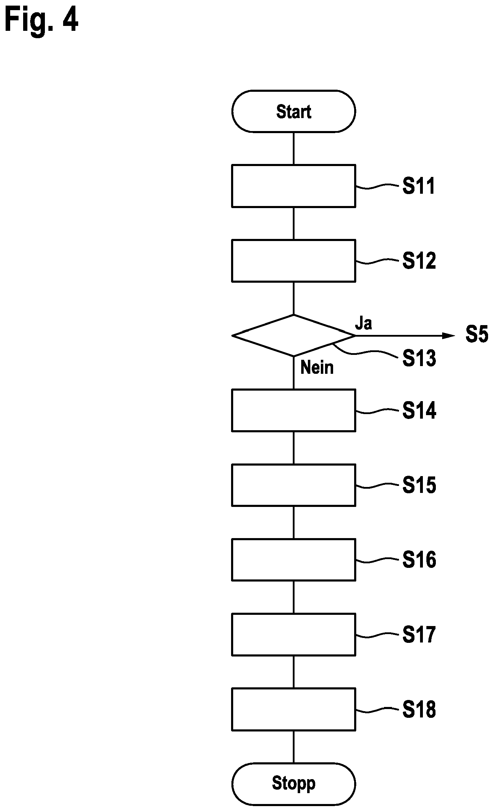

In Schritt S5 wird überprüft, ob eine Manhattan-Orientierung detektiert werden kann. Dazu wird ein Verfahren ausgeführt, wie es in Verbindung mit dem Flussdiagramm der Figur 4 nachfolgend ausführlicher dargestellt ist. Entsprechend der Detektion der Manhattan-Orientierung werden dem SLAM-Graphen Manhattan-Knoten MK und Manhattan-Kanten M hinzugefügt.

In Schritt S6 wird eine Optimierung des SLAM-Graphen durchgeführt, wie beispielsweise beschrieben in Grisetti, G. et al., "A Tutorial on Graph-Based SLAM", IEEE Intelligent Transportation Systems Magazine, 2.4 (2010), Seiten 31 bis 43. Die Durchführung des Optimierungsverfahrens ist notwendig, da die Sensordaten rausch- oder messfehlerbehaftet sind, so dass keine exakte Lösung für den SLAM-Graphen besteht. Stattdessen wird eine Fehlerfunktion minimiert, die einer Summenfunktion über alle Kanten entspricht, wobei z.B. für jede Kante i, j die Fehlerfunktion definiert ist als $e\_ij = (p_j \ominus p_i) \ominus (m_{ji})$, wobei $p_j, p_i$ den Posen der Posenknoten i,j und den $m_{ji}$ der Bewegungsmessung der Transformationskante ij entsprechen. Die gesamte Fehlerfunktion entspricht

$$e = \sum(e'_{ji} \Omega_{ji} e_{ji})$$

wobei $\Omega_{ji}$ der Inversen der Kovarianz, die den Messungen $m_{ji}$ zugeordnet ist, entspricht.

Die Fehlerfunktionen werden mithilfe von herkömmlichen Optimierungsalgorithmen minimiert, wie z. B. Gauß-Newton oder Levenberg-Marquardt. Das Ergebnis des Optimierungsverfahrens sind für die Posenknoten des Graphen korrigierte Posen des mobilen Agenten 1. Aus dem zuletzt hinzugefügten Posenknoten P lässt sich somit die aktuelle Pose des mobilen Agenten 1 im Referenz-Koordinatensystem ermitteln und ggfs. basierend auf den Sensordaten die Umgebungskarte erstellen. Nun kann basierend auf der Umgebungskarte und der aktuellen Pose des mobilen Agenten 1 eine Trajektorienplanung in an sich bekannter Weise vorgenommen werden.

In Figur 4 ist ein Flussdiagramm zur Veranschaulichung der Einbindung des Manhattan-World-Konzepts in das zuvor beschriebene Verfahren zum Lokalisieren des mobilen Agenten 1 in dem Referenz-Koordinatensystem K und der Stellung der Umgebungskarte.

In Schritt S11 wird überprüft, ob eine Manhattan-Orientierung vorliegt. Dazu werden die Sensordaten als Punktewolke von Erfassungspositionen von Wänden 2 oder Objekten 3 in Zellen gruppiert. Die Zellen können beispielsweise eine vorgegebene Größe von z. B. 1 m $\times$ 1 m oder dergleichen aufweisen. Für alle derartigen Zellen, die mindestens drei Erfassungspunkte beinhalten, wird der Mittelwert und die Kovarianzmatrix der Punkte berechnet. Dies erfolgt basierend auf einem an sich bekannten Verfahren und ist beispielsweise als Grundlage für das sogenannte NDT-basierte Scan-Matching-Verfahren in Biber, W. et al., "The normal distributions transform: A new approach to laser scan matching", Proceedings 2003, IEEE/RSJ International Conference on Intelligent Robots and Systems (IROS 2003), Vol. 3, 2003, beschrieben.

In Schritt S12 werden die Zellen ermittelt, die eine kantige Struktur aufweisen. Dazu werden Eigenwerte der Kovarianzmatrix bestimmt. Nur Zellen, bei denen das Verhältnis zwischen dem größten und dem kleinsten Eigenwert größer als ein vorgegebener Schwellenwert ist, wie beispielsweise 100, werden als ausgewählte Zellen beibehalten.

In Schritt S13 wird überprüft, ob die Anzahl dieser ausgewählten Zellen geringer als ein vorgegebener Schwellenwert. Ist dies der Fall (Alternative: Ja) wird das Verfahren beendet, ohne eine Manhattan-Orientierung zu ermitteln und das Verfahren der Figur 2 mit Sprung zu Schritt S5 fortgesetzt. Andernfalls (Alternative: Nein) wird das Verfahren mit Schritt S14 fortgesetzt.

In Schritt S14 wird die Orientierung der Zellen aus ihrem jeweiligen Eigenvektor (Ex, Ey) berechnet entsprechend dem größten Eigenvektor als a = atan2 (Ey, Ex) berechnet.

Die Orientierung wird in Schritt S15 dann auf einen Mittelbereich von -45° bis +45° normalisiert. Diese Normalisierung wird in der Regel Manhattan-Normalisierung genannt und erfolgt durch Addition oder Subtraktion von 90° -Winkeln oder Vielfachen davon.

Die Berechnung der Manhattan-Orientierung als dominante Orientierung erfolgt in Schritt S16 aus der Gruppe von berechneten Zellorientierungen der ausgewählten Zellen. Dies kann mit verschiedenen Verfahren erfolgen.

Beispielsweise kann gemäß einem Verfahren für jede Zellenorientierung die Ähnlichkeiten s zu anderen Orientierungen berechnet werden. Die Ähnlichkeiten zwischen den Orientierungen der ausgewählten Zellen wird jeweils berechnet, beispielsweise als der Winkelabstand d zwischen ihren Manhattan-normalisierten Orientierungen entsprechend $s = e^{-d/2\sigma}$, wobei $\sigma$ ein gewählter Parameter sein kann. Der Ähnlichkeitswert bezüglich einer Zelle wird anschließend durch Summierung aller Ähnlichkeiten s ermittelt.

Die Zellenorientierung mit dem höchsten Ähnlichkeitswert wird als Manhattan-Orientierung für diesen Erfassungszyklus festgelegt.

In Schritt S17 wird die berechnete Manhattan-Orientierung als gültig erachtet, wenn mehr als eine vorgegebene Anzahl von Zellenorientierungen innerhalb eines definierten Manhattan-normalisierten Abstandes zu der berechneten Manhattan-Orientierung sind. Die Manhattan-Orientierung repräsentiert die eine Vorzugsrichtung der Umgebung, die in festem Bezug zu dem Referenzkoordinatensystem steht.

In Schritt S18 wird dem SLAM-Graphen ein Manhattan-Knoten hinzugefügt, der der berechneten Manhattan-Orientierung entspricht. Dann wird für eine vorgegebene Mindestanzahl erfasste Detektionen von Manhattan-Orientierungen eine Manhattan-Kante hinzugefügt, die die entsprechenden Posenknoten, der der Detektion entspricht, mit dem neu hinzugefügten Manhattan-Knoten verbindet.

Der Manhattan-Kante ist eine Manhattanfehlerfunktion zugeordnet, die als

$$e = manhattan\_normalize(\varphi_{Posenkante} + \varphi_{Mess} - \varphi_{Manhattan})$$

definiert ist, wobei $\varphi_{Posenkante}$ der Orientierung des Posenknotens, $\varphi_{Mess}$ der detektierten Manhattan-Orientierung, $\varphi_{Manhattan}$ dem Zustand des Manhattan-Knotens und manhattan_normalize die Funktion der Manhattan-Normalisierung entsprechen, die die Orientierung auf einen Bereich zwischen -45° und 45° normiert.

Jede Manhattan Kante wird mit einem robusten Kernel mit angemessener Bandweite ausgestattet (z.B. 0.1). Die robusten Kernel erlauben eine präzise Schätzung des korrekten Manhattan-Winkels für den Fall, dass einige Kanten mit fehlerhaften Messungen im Graphen enthalten sind. Diese Technik entspricht dem Stand der Technik und ist z.B. beschrieben in Agarwal, P., Tipaldi, G. D., Spinello, L., Stachniss, C., & Burgard, W. (2013, May), "Robust map optimization using dynamic covariance scaling", 2013 IEEE International Conference on Robotics and Automation (Seiten 62-69).

Anschließend wird das Verfahren mit Schritt S6 des Verfahrens der Figur 2 fortgesetzt.

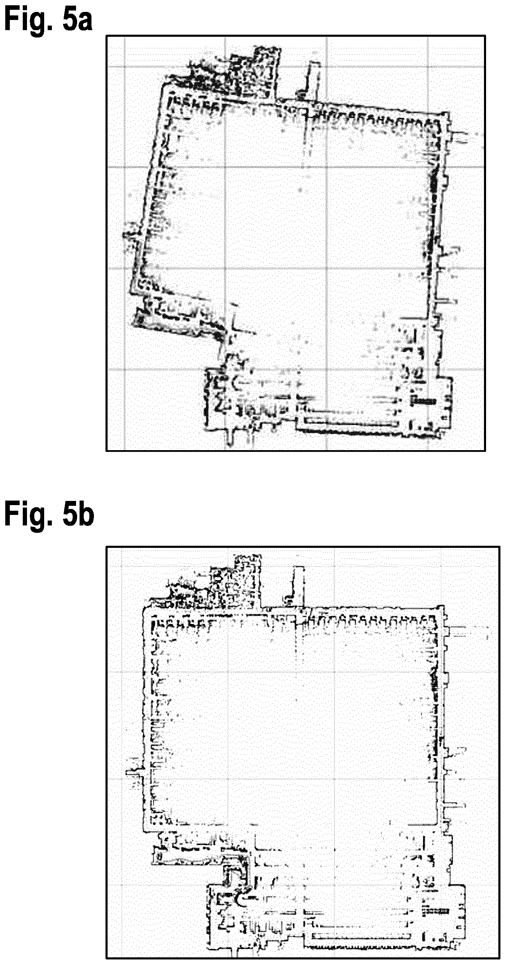

In der Figur 5a ist eine schematische Darstellung einer Erfassung einer Umgebungskarte durch einen herkömmlichen SLAM-Algorithmus gezeigt. Im Vergleich dazu zeigt Figur 5b eine Darstellung einer erfassten Umgebungskarte basierend auf einem SLAM-Algorithmus unter Berücksichtigung eines Manhattan-Welt-Konzepts.

Durch Erweiterung des SLAM-Graphen durch Manhattan-Knoten und Manhattan-Kanten wird dem Optimierungsproblem eine weitere Gruppe von Variablen, die zu optimieren sind, hinzugefügt. Weiterhin wird ein zusätzlicher Fehlerterm für jede Manhattan-Kante erzeugt, die bei dem Optimierungsproblem berücksichtigt werden müssen.

Das oben beschriebene Verfahren ermöglicht die Einbindung des Manhattan-Welt-Konzeptes in einen Graph-basierten SLAM-Algorithmus. Die Einbindung erfolgt so, dass keine Bezugnahme auf vorangegangene erfasste Sensordaten erfolgen muss. Es wird lediglich der SLAM-Graph mit Informationen ergänzt, die sich aus Erkenntnissen der Manhattan-Welt-Konzeptes ergeben.

**Patentansprüche**

**1.** Computer-implementiertes Verfahren zum Betreiben eines mobilen Agenten (1) in einer Umgebung basierend auf einer Pose des mobilen Agenten (1), wobei eine Lokalisation des mobilen Agenten (1) für das Betreiben des mobilen Agenten (1) mit folgenden Schritten durchgeführt wird:

- Erfassen (S1) von Sensordaten über in einer Umgebung befindlichen Wände (2) und/oder Objekte (3), wobei die Sensordaten die Ausrichtung und Entfernung der Wände (2) und/oder Objekte (3) in einem agentenfesten Agenten-Koordinatensystem (A) angeben;
- Ermitteln (S11-S18) der Pose des mobilen Agenten (1) in der Umgebung mithilfe eines SLAM-Algorithmus unter Berücksichtigung einer Manhattan-Orientierung,

wobei der SLAM-Algorithmus eine Minimierung einer von Messfehlern der Sensordaten abhängigen Fehlerfunktion vorsieht, der von der Manhattan-Orientierung abhängt, wobei der SLAM-Algorithmus einem graphbasierten SLAM-Algorithmus basierend auf einem SLAM-Graphen mit Knoten (P) und Transformationskanten (TK, M) entspricht, wobei der SLAM-Graph Posenknoten (P), die jeweils eine aus den Sensordaten ermittelte Pose des mobilen Agenten angeben, und Transformationskanten (TK) zwischen jeweils zwei Posenknoten (P) aufweist, wobei die Transformationskanten (TK) eine aus den Sensordaten ermittelte Posenänderung zwischen den den jeweils zwei Posenknoten (P) zugeordneten Posen angeben, **dadurch gekennzeichnet, dass** abhängig von der Manhattan-Orientierung ein Manhattan-Knoten (MK) und mindestens eine Manhattan-Kante (M) zwischen dem Manhattan-Knoten (MK) und einem der Posenknoten (P) hinzugefügt wird, wobei der SLAM-Algorithmus eine aus dem SLAM-Graphen bestimmte Fehlerfunktion nutzt, die die den Knoten (P, MK) und Kanten (TK, M) zugeordneten Fehlerwahrscheinlichkeiten berücksichtigt, um die den Knoten (P, MK) des SLAM-Graphen zugeordnete korrigierte Posen zu ermitteln.

2. Verfahren nach Anspruch 1, wobei aus den Sensordaten eine Punktemenge bestimmt wird, die die Koordinaten der erfassten Wände (2) und/oder Objekte (3) angibt, wobei die Punkte der Punktemenge zu einander benachbarte lokale Zellen zusammengefasst werden, wobei eine Manhattan-Normalisierung auf diejenigen Zellen angewendet wird, die eine Zellenorientierung mit einer geradlinigen oder 90°- Struktur aufweisen, wobei die Manhattan-Orientierung abhängig von einer dominanten Orientierung von geradlinigen Strukturen in den lokalen Zellen bestimmt wird.

3. Verfahren nach Anspruch 2, wobei zur Bestimmung der dominanten Orientierung der Zellen für jede Zellenorientierung einer Zelle eine Ähnlichkeit zu allen anderen Zellenorientierungen ermittelt wird und für jede Zelle ein Ähnlichkeitsmaß, insbesondere als eine Summe aus den Ähnlichkeiten der jeweiligen Zelle bezüglich der übrigen Zellen ermittelt wird, wobei die Manhattan-Orientierung einer Zellenorientierung einer der Zellen entspricht, die entsprechend dem Ähnlichkeitsmaß gewählt ist, insbesondere deren Ähnlichkeitsmaß maximal ist.

4. Verfahren nach Anspruch 3, wobei die Bestimmung der Ähnlichkeiten abhängig von einem Manhattan-normalisierten Orientierungsunterschied zwischen jeweils zwei der Zellenorientierungen durchgeführt wird, wobei insbesondere die Ähnlichkeiten abhängig von einer Exponentialfunktion des negativen Manhattan-normalisierten Unterschieds ermittelt werden.

5. Verfahren nach einem der Ansprüche 2 bis 4, wobei die bestimmte Manhattan-Orientierung nur dann berücksichtigt wird, wenn sich mehr als eine vorgegebene Anzahl von Zellenorientierungen der Zellen innerhalb eines Manhattan-normalisierten Orientierungsunterschieds zu der bestimmten Manhattan-Orientierung befinden.

6. Verfahren nach einem der Ansprüche 1 bis 5, wobei der mobile Agent (1) abhängig von der ermittelten Pose betrieben wird und/oder wobei mithilfe der aktuellen Pose des mobilen Agenten (1) eine Umgebungskarte ermittelt wird und der mobile Agent (1) abhängig von der Umgebungskarte betrieben wird.

7. Vorrichtung, insbesondere eine Steuereinheit (11), zum Betreiben eines mobilen Agenten (1) in einer Umgebung basierend auf einer Pose des mobilen Agenten (1), wobei die Vorrichtung ausgebildet ist, eine Lokalisation des mobilen Agenten (1) mit folgenden Schritten durchzuführen:

- Erfassen (S1) von Sensordaten über in einer Umgebung befindlichen Wände (2) und/oder Objekte (3), wobei die Sensordaten die Ausrichtung und Entfernung der Wände (2) und/oder Objekte (3) in einem agentenfesten Agenten-Koordinatensystem (A) angeben;
- Ermitteln (S11-S18) der Pose des mobilen Agenten (1) in der Umgebung mithilfe eines SLAM-Algorithmus unter Berücksichtigung einer Manhattan-Orientierung,

wobei der SLAM-Algorithmus eine Minimierung einer von Messfehlern der Sensordaten abhängigen Fehlerfunktion vorsieht, der von der Manhattan-Orientierung abhängt, wobei der SLAM-Algorithmus einem graphbasierten SLAM-Algorithmus basierend auf einem SLAM-Graphen mit Knoten (P) und Transformationskanten (TK, M) entspricht, wobei der SLAM-Graph Posenknoten (P), die jeweils eine aus den Sensordaten ermittelte Pose des mobilen Agenten angeben, und Transformationskanten (TK) zwischen jeweils zwei Posenknoten (P) aufweist, wobei die Transformationskanten (TK) eine aus den Sensordaten ermittelte Posenänderung zwischen den den jeweils zwei Posenknoten (P) zugeordneten Posen angeben, **dadurch gekennzeichnet, dass** abhängig von der Manhattan-Orientierung ein Manhattan-Knoten (MK) und mindestens eine Manhattan-Kante (M) zwischen dem Manhattan-Knoten (MK) und einem der Posenknoten (P) hinzugefügt wird, wobei der SLAM-Algorithmus eine aus dem SLAM-Graphen bestimmte Fehlerfunktion nutzt, die die den Knoten (P, MK) und Kanten (TK, M) zugeordneten Fehlerwahrscheinlichkeiten berücksichtigt, um die den Knoten (P, MK) des SLAM-Graphen zugeordnete korrigierte Posen zu ermitteln.

8. Mobiler Agent (1) mit einer Vorrichtung nach Anspruch 7, einer Umgebungserfassungssensorik (12) zum Bereitstellen der Sensordaten und einer Bewegungsaktuatorik (13) auf, die ausgebildet ist, um den mobilen Agenten (1) zu bewegen.

9. Computerprogramm mit Programmcodemitteln, das dazu eingerichtet ist, ein Verfahren nach einem der Ansprüche 1 bis 8 auszuführen, wenn das Computerprogramm auf einer Recheneinheit ausgeführt wird.

10. Maschinenlesbares Speichermedium mit einem darauf gespeicherten Computerprogramm nach Anspruch 9.

## Claims

1. Computer-implemented method for operating a mobile agent (1) in an environment on the basis of a pose of the mobile agent (1), wherein a localization of the mobile agent (1) for the operation of the mobile agent (1) is carried out with the following steps:

   - capturing (S1) sensor data regarding walls (2) and/or objects (3) located in an environment, wherein the sensor data indicate the alignment and distance of the walls (2) and/or objects (3) in an agent-fixed agent coordinate system (A);
   - determining (S11-S18) the pose of the mobile agent (1) in the environment with the aid of a SLAM algorithm taking into account a Manhattan orientation,
   wherein the SLAM algorithm provides a minimization of an error function which is dependent on measurement errors of the sensor data and dependent on the Manhattan orientation, wherein the SLAM algorithm corresponds to a graph-based SLAM algorithm on the basis of a SLAM graph having nodes (P) and transformation edges (TK, M), wherein the SLAM graph contains pose nodes (P) that each indicate a pose of the mobile agent determined from the sensor data, and transformation edges (TK) between each two pose nodes (P), wherein the transformation edges (TK) indicate a pose change, determined from the sensor data, between the poses assigned to the respectively two pose nodes (P), **characterized in that** depending on the Manhattan orientation a Manhattan node (MK) and at least one Manhattan edge (M) between the Manhattan node (MK) and one of the pose nodes (P) are added,
   wherein the SLAM algorithm uses an error function which is ascertained from the SLAM graph and which takes account of the error probabilities assigned to the nodes (P, MK) and edges (TK, M) in order to determine the corrected poses assigned to the nodes (P, MK) of the SLAM graph.

2. Method according to Claim 1, wherein a point set indicating the coordinates of the captured walls (2) and/or objects (3) is ascertained from the sensor data, wherein the points of the point set are combined to form local cells adjacent to one another, wherein a Manhattan normalization is applied to those cells which have a cell orientation having a rectilinear or 90° structure, wherein the Manhattan orientation is ascertained depending on a dominant orientation of rectilinear structures in the local cells.

3. Method according to Claim 2, wherein for the purpose of ascertaining the dominant orientation of the cells for each cell orientation of a cell a similarity to all the other cell orientations is determined and for each cell a similarity measure is determined, in particular as a sum of the similarities of the respective cell in relation to the other cells, wherein the Manhattan orientation corresponds to a cell orientation of one of the cells which is chosen according to the similarity measure, in particular the similarity measure of which is a maximum.

4. Method according to Claim 3, wherein the similarities are ascertained depending on a Manhattan-normalized orientation difference between each two of the cell orientations, wherein in particular the similarities are determined depending on an exponential function of the negative Manhattan-normalized difference.

5. Method according to any of Claims 2 to 4, wherein the ascertained Manhattan orientation is taken into account only if more than a predefined number of cell orientations of the cells are located within a Manhattan-normalized orientation difference with respect to the ascertained Manhattan orientation.

6. Method according to any of Claims 1 to 5, wherein the mobile agent (1) is operated depending on the determined pose and/or wherein with the aid of the current pose of the mobile agent (1) an environment map is determined and the mobile agent (1) is operated depending on the environment map.

7. Device, in particular a control unit (11), for operating a mobile agent (1) in an environment on the basis of a pose of the mobile agent (1), wherein the device is designed to carry out a localization of the mobile agent (1) with the following steps:

   - capturing (S1) sensor data regarding walls (2) and/or objects (3) located in an environment, wherein the sensor data indicate the alignment and distance of the walls (2) and/or objects (3) in an agent-fixed agent coordinate system (A);
   - determining (S11-S18) the pose of the mobile agent (1) in the environment with the aid of a SLAM algorithm taking into account a Manhattan orientation,
   wherein the SLAM algorithm provides a minimization of an error function which is dependent on measurement errors of the sensor data and dependent on the Manhattan orientation, wherein the SLAM algorithm corresponds to a graph-based SLAM algorithm on the basis of a SLAM graph having nodes (P) and transformation edges (TK, M), wherein the SLAM graph contains pose nodes (P) that each indicate a pose of the mobile agent determined from the sensor data, and transformation edges (TK) between each two pose nodes (P), wherein the transformation edges (TK) indicate a pose change, determined from the sensor data, between the poses assigned to the respectively two pose nodes (P), **characterized in that** depending on the Manhattan orientation a Manhattan node (MK) and at least one Manhattan edge (M) between the Manhattan node (MK) and one of the pose nodes (P) are added,
   wherein the SLAM algorithm uses an error function which is ascertained from the SLAM graph and which takes account of the error probabilities assigned to the nodes (P, MK) and edges (TK, M) in order to determine the corrected poses assigned to the nodes (P, MK) of the SLAM graph.

8. Mobile agent (1) comprising a device according to Claim 7, an environment-capturing sensor system (12) for providing the sensor data, and a movement actuator system (13) designed to move the mobile agent (1).

9. Computer program comprising program code means which is configured to carry out a method according to any of Claims 1 to 8 when the computer program is executed on a computing unit.

10. Machine-readable storage medium with a computer program according to Claim 9 stored thereon.

**Revendications**

1. Procédé mis en œuvre par ordinateur pour faire fonctionner un agent mobile (1) dans un environnement sur la base d'une pose de l'agent mobile (1), dans lequel une localisation de l'agent mobile (1) pour faire fonctionner l'agent mobile (1) est effectuée par les étapes suivantes consistant à :

   - détecter (S1) des données de capteur concernant des murs (2) et/ou des objets (3) se trouvant dans un environnement, dans lequel les données de capteur indiquent l'alignement et la distance des murs (2) et/ou des objets (3) dans un système de coordonnées d'agent (A) solidaire de l'agent ;
   - établir (S11 à S18) la pose de l'agent mobile (1) dans l'environnement à l'aide d'un algorithme SLAM en tenant compte d'une orientation Manhattan,
   dans lequel l'algorithme SLAM prévoit une minimisation d'une fonction d'erreur dépendant d'erreurs de mesure des données de capteur et qui dépend de l'orientation Manhattan, dans lequel l'algorithme SLAM correspond à un algorithme SLAM basé sur des graphes, sur la base d'un graphe SLAM avec des noeuds (P) et des arêtes de transformation (TK, M), dans lequel le graphe SLAM présente des noeuds de pose (P) qui indiquent respectivement une pose de l'agent mobile, établie à partir des données de capteur, et des arêtes de transformation (TK) entre respectivement deux noeuds de pose (P), dans lequel les arêtes de transformation (TK) indiquent un changement de pose entre les poses associées aux deux noeuds de pose (P) respectivement, établi à partir des données de capteur,

**caractérisé en ce qu'**en fonction de l'orientation Manhattan, un noeud Manhattan (MK) et au moins une arête Manhattan (M) sont ajoutés entre le noeud Manhattan (MK) et l'un des noeuds de pose (P),

dans lequel l'algorithme SLAM exploite une fonction d'erreur déterminée à partir du graphe SLAM qui tient compte des probabilités d'erreur associées aux noeuds (P, MK) et aux arêtes (TK, M) afin d'établir des poses corrigées associées aux noeuds (P, MK) du graphe SLAM.

2. Procédé selon la revendication 1, dans lequel un nuage de points est déterminé à partir des données de capteur et indique les coordonnées des murs (2) et/ou des objets (3) détectés, dans lequel les points du nuage de points sont regroupés en cellules locales voisines les unes des autres, dans lequel une normalisation Manhattan est appliquée aux cellules qui présentent une orientation de cellule ayant une structure droite ou à 90°, dans lequel l'orientation Manhattan est déterminée en fonction d'une orientation dominante de structures droites dans les cellules locales.

3. Procédé selon la revendication 2, dans lequel, pour la détermination de l'orientation dominante des cellules, pour chaque orientation de cellule d'une cellule, une similitude avec toutes les autres orientations de cellule est établie, et pour chaque cellule, un degré de similitude, en particulier sous la forme d'une somme des similitudes de la cellule respective par rapport aux autres cellules est établi, dans lequel l'orientation Manhattan correspond à une orientation de cellule d'une des cellules qui est sélectionnée selon le degré de similitude, en particulier dont le degré de similitude est maximal.

4. Procédé selon la revendication 3, dans lequel la détermination des similitudes est effectuée en fonction d'une différence d'orientation normalisée Manhattan entre respectivement deux des orientations de cellule, dans lequel en particulier les similitudes sont établies en fonction d'une fonction exponentielle de la différence normalisée Manhattan négative.

5. Procédé selon l'une quelconque des revendications 2 à 4, dans lequel l'orientation Manhattan déterminée n'est prise en compte que si plus qu'un nombre prédéfini d'orientations de cellule des cellules se trouvent à l'intérieur d'une différence d'orientation normalisée Manhattan par rapport à l'orientation Manhattan déterminée.

6. Procédé selon l'une quelconque des revendications 1 à 5, dans lequel l'agent mobile (1) fonctionne en fonction de la pose établie, et/ou dans lequel, à l'aide de la pose actuelle de l'agent mobile (1), une carte d'environnement est établie et l'agent mobile (1) fonctionne en fonction de la carte d'environnement.

7. Dispositif, en particulier unité de commande (11), pour faire fonctionner un agent mobile (1) dans un environnement sur la base d'une pose de l'agent mobile (1), dans lequel le dispositif est réalisé pour effectuer une localisation de l'agent mobile (1) par les étapes suivantes consistant à :

- détecter (S1) des données de capteur concernant des murs (2) et/ou des objets (3) se trouvant dans un environnement, dans lequel les données de capteur indiquent l'alignement et la distance des murs (2) et/ou des objets (3) dans un système de coordonnées d'agent (A) solidaire de l'agent ;
- établir (S11 à S18) la pose de l'agent mobile (1) dans l'environnement à l'aide d'un algorithme SLAM en tenant compte d'une orientation Manhattan,

dans lequel l'algorithme SLAM prévoit une minimisation d'une fonction d'erreur dépendant d'erreurs de mesure des données de capteur et qui dépend de l'orientation Manhattan, dans lequel l'algorithme SLAM correspond à un algorithme SLAM basé sur des graphes, sur la base d'un graphe SLAM avec des noeuds (P) et des arêtes de transformation (TK, M), dans lequel le graphe SLAM présente des noeuds de pose (P) qui indiquent respectivement une pose de l'agent mobile, établie à partir des données de capteur, et des arêtes de transformation (TK) entre respectivement deux noeuds de pose (P), dans lequel les arêtes de transformation (TK) indiquent un changement de pose entre les poses associées aux deux noeuds de pose (P) respectivement, établi à partir des données de capteur,

**caractérisé en ce qu'**en fonction de l'orientation Manhattan, un noeud Manhattan (MK) et au moins une arête Manhattan (M) sont ajoutés entre le noeud Manhattan (MK) et l'un des noeuds de pose (P),

dans lequel l'algorithme SLAM exploite une fonction d'erreur déterminée à partir du graphe SLAM qui tient compte des probabilités d'erreur associées aux noeuds (P, MK) et aux arêtes (TK, M) afin d'établir des poses corrigées associées aux noeuds (P, MK) du graphe SLAM.

8. Agent mobile (1) comprenant un dispositif selon la revendication 7, un système de capteurs de détection d'environnement (12) pour fournir les données de capteur et un système d'actionneurs de mouvement (13) qui est réalisé pour déplacer l'agent mobile (1).

9. Programme informatique comprenant des moyens de code programme, qui est conçu pour exécuter un procédé selon l'une quelconque des revendications 1 à 8 lorsque le programme informatique est exécuté sur une unité de calcul.

10. Support de stockage lisible par machine sur lequel est enregistré un programme informatique selon la revendication 9.

# Fig. 1

# Fig. 2

# Fig. 3

# Fig. 4

```
        ┌───────────┐
        │   Start   │
        └─────┬─────┘
              │
        ┌─────┴─────┐
        │           │──── S11
        └─────┬─────┘
              │
        ┌─────┴─────┐
        │           │──── S12
        └─────┬─────┘
              │
             ╱ ╲         Ja
            ╱   ╲────────────────→  S5
            ╲   ╱──── S13
             ╲ ╱
            Nein
              │
        ┌─────┴─────┐
        │           │──── S14
        └─────┬─────┘
              │
        ┌─────┴─────┐
        │           │──── S15
        └─────┬─────┘
              │
        ┌─────┴─────┐
        │           │──── S16
        └─────┬─────┘
              │
        ┌─────┴─────┐
        │           │──── S17
        └─────┬─────┘
              │
        ┌─────┴─────┐
        │           │──── S18
        └─────┬─────┘
              │
        ┌─────┴─────┐
        │   Stopp   │
        └───────────┘
```

## Fig. 5a

## Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DIE DRUCKSCHRIFT RUIBIN GUO et al.** RGB-D SLAM Using Point-Plane Constraints for Indoor Environments. *Sensors,* 17. Juni 2019, vol. 1 (12), 2721
- **DIE DRUCKSCHRIFT ALEX FLINT et al.** Growing semantically meaningful models for visual SLAM. *2010 IEEE CONFERENCE ON COMPUTER VISION AND PATTERN RECOGNITION (CVPR),* 13. Juni 2010, 467-474
- Dense piecewise planar RGB-D SLAM for indoor environments. **DIE DRUCKSCHRIFT LE PHI-HUNG et al.** 2017 IEEE/RSJ INTERNATIONAL CONFERENCE ON INTELLIGENT ROBOTS AND SYSTEMS (IROS). IEEE, 24. September 2017, 4944-4949
- **DER DRUCKSCHRIFT B. BEASLEY et al.** Accurate On-Line 3D Occupancy Grids Using Manhattan World Constraints. *2012, IEEE/RSJ International Conference on Intelligent Robots and Systems,* 5283-5290

- **EDWIN B. OLSON.** Robust and Efficient Robotic Mapping. *Ph.D. Dissertation. Massachusetts Institute of Technology,* 2008
- **GRISETTI, G. et al.** A Tutorial on Graph-Based SLAM. *IEEE Intelligent Transportation Systems Magazine,* 2010, vol. 2 (4), 31-43
- **BIBER, W. et al.** The normal distributions transform: A new approach to laser scan matching. *Proceedings 2003, IEEE/RSJ International Conference on Intelligent Robots and Systems,* 2003, vol. 3
- **AGARWAL, P ; TIPALDI, G. D ; SPINELLO, L ; STACHNISS, C. ; BURGARD, W.** Robust map optimization using dynamic covariance scaling. *2013 IEEE International Conference on Robotics and Automation,* Mai 2013, 62-69